# EUROPÄISCHE PATENTSCHRIFT

(11) **EP 3 151 543 B1**
(45) Veröffentlichungstag und Bekanntmachung des Hinweises auf die Patenterteilung: **01.08.2018**
(21) Anmeldenummer: 16190793.6
(22) Anmeldetag: 27.09.2016
(51) Int. Cl.: H04N 5/235, B60R 1/00

(54) **BILDAUFNAHMEEINRICHTUNG FÜR EIN KRAFTFAHRZEUG UND VERFAHREN ZUM BETREIBEN EINER DERARTIGEN BILDAUFNAHMEEINRICHTUNG**
IMAGE PICKUP DEVICE FOR VEHICLE AND METHOD OF DRIVING SUCH AN IMAGE PICK UP DEVICE
DISPOSITIF DE CAPTURE D'IMAGE POUR VÉHICULE ET MÉTHODE POUR COMMANDER DUDIT DISPOSITIF

(30) Priorität: 02.10.2015 DE 102015012809
(43) Veröffentlichungstag der Anmeldung: 05.04.2017
(73) Patentinhaber: AUDI AG, 85045 Ingolstadt (DE)
(72) Erfinder: Raaijmakers, Marvin, 85057 Ingolstadt (DE)

(56) Entgegenhaltungen:
- EP-A1- 1 349 381
- JP-A- H09 181 962
- JP-A- 2012 004 621
- US-A1- 2012 162 424

## Beschreibung

Die Erfindung betrifft ein Verfahren zum Betreiben einer Bildaufnahmeeinrichtung in einem Kraftfahrzeug durch Aufnehmen von ersten Bilddaten mit einer ersten Belichtungszeit in Abhängigkeit von einem innerhalb eines Erfassungsbereichs der Bildaufnahmeeinrichtung erfassbaren ersten Umgebungsbild, Einstellen der ersten Belichtungszeit in Abhängigkeit von den ersten Bilddaten, und Aufnehmen von zweiten Bilddaten mit einer zweiten Belichtungszeit in Abhängigkeit von einem innerhalb des Erfassungsbereichs der Bildaufnahmeeinrichtung erfassbaren zweiten Umgebungsbild. Weiterhin betrifft die Erfindung eine Bildaufnahmeeinrichtung für ein Kraftfahrzeug mit einem opto-elektronischen Bildwandler, welcher dazu ausgelegt ist, erste Bilddaten mit einer ersten Belichtungszeit in Abhängigkeit von einem innerhalb eines Erfassungsbereichs der Bildaufnahmeeinrichtung erfassbaren ersten Umgebungsbild aufzunehmen und zweite Bilddaten mit einer zweiten Belichtungszeit in Abhängigkeit von einem innerhalb des Erfassungsbereichs der Bildaufnahmeeinrichtung erfassbaren zweiten Umgebungsbild aufzunehmen, und einer Steuereinheit, welche dazu ausgelegt ist, die erste Belichtungszeit in Abhängigkeit von den ersten Bilddaten einzustellen. Überdies betrifft die Erfindung ein Kraftfahrzeug mit einer derartigen Bildaufnahmeeinrichtung.

Derzeitige Bildaufnahmeeinrichtungen, beispielsweise Kameras, welche für Fahrerassistenzsysteme verwendet werden, passen die Belichtungszeit an die Helligkeitsgegebenheiten der Umgebung an, um eine Über- oder Unterbelichtung zu vermeiden. Wenn sich jedoch die Helligkeitsgegebenheiten plötzlich ändern, weil das Fahrzeug einen Übergang von einer dunklen zu einer hellen Umgebung oder umgekehrt ausgeführt hat, beispielsweise beim Einfahren in einen Tunnel oder beim Verlassen eines Tunnels, wird es in diesem Fall einige Zeit dauern, bis die Kamera die Belichtungszeit angepasst hat, wobei insbesondere vorkommen kann, dass die Kamera so lange quasi blind ist infolge einer Über- oder Unterbelichtung. Während der Dauer dieses quasi blinden Zustands kann die Bildaufnahmeeinrichtung keine Bilddaten zur Verfügung stellen, welche von einem Fahrerassistenzsystem genutzt werden können.

In der DE 10 2008 022 064 A1 wird ein Verfahren zur Belichtungssteuerung für ein Kamerasystem in einem Kraftfahrzeug angegeben. Mit dem Kamerasystem wird eine Bilderfolge von der Fahrzeugumgebung mit einer optimalen Belichtungszeit aufgenommen. Die optimale Belichtungszeit ist in Abhängigkeit von der Umgebungshelligkeit beziehungsweise der Helligkeit einzelner Objekte im Bild vorgegeben. Es wird zumindest ein Zwischenbild mit einer kurzen vorgegebenen Belichtungszeit, das heißt einer Belichtungszeit kürzer als die optimale Belichtungszeit, aufgenommen, wenn die optimale Belichtungszeit länger als ein vorgegebener Schwellwert ist.

In diesem Zusammenhang ist aus der US 2004/0227814 A1 ein Kamerasystem mit einer Belichtungssteuerung in Abhängigkeit von unter anderem Signalen eines Helligkeitssensors bekannt. In Bezug auf ein Doppelbelichtungsschema, welches jeweils erste und zweite Bilder, die über erste und zweite Belichtungszeiten gewonnen werden, für die Gewinnung eines finalen Bildes außerhalb eines Fahrzeugs zusammenfügt, wird wenigstens ein Einstellparameter berechnet und dabei wenigstens eine der ersten und der zweiten Belichtungszeiten auf der Basis des Einstellparameters angepasst.

Weiterhin ist aus der EP 2 136 562 A2 ein bildverarbeitendes Kamerasystem und eine Steuermethode für eine bildverarbeitende Kamera bekannt. Das Kamerasystem umfasst Kontrolleinheiten für Belichtung, Helligkeit und Farbe der aufgenommenen Bilder, welche für die Ausgabe an einen Fahrer oder an einen Prozessor für eine weitere Datenfusion verarbeitet werden. Deren Zweck ist, zwischen den vielfachen Applikationsprogrammen, welche dynamisch die Kameraparameter variieren, mit einer hohen Zuverlässigkeit das Kamerasystem gemeinsam benutzbar zu machen.

Aus dem weiteren Umfeld ist schließlich aus der DE 10 2013 220 839 A1 ein Fahrzeugabbildungssystem bekannt, welches eine Bilderfassungsvorrichtung enthält, die ein Bild außerhalb eines Fahrzeugs erfasst. Das erfasste Bild enthält wenigstens einen Teil einer Himmelsszene. Ein Prozessor erzeugt aus dem durch die Bilderfassungsvorrichtung erfassten Teil der Himmelsszene ein virtuelles Bild einer virtuellen Himmelsszene. Der Prozessor bestimmt aus dem virtuellen Bild eine Helligkeit der virtuellen Himmelsszene. Der Prozessor stellt auf der Grundlage der bestimmten Helligkeit des virtuellen Bilds eine Helligkeit des erfassten Bilds dynamisch ein. Eine Rückspiegel-Anzeigevorrichtung zeigt das eingestellte erfasste Bild an.

Aus der DE 10 2008 025 723 A1 ist eine Vorrichtung zur Überwachung der Umgebung eines Fahrzeugs bekannt. Die Vorrichtung umfasst eine Bildaufnahmeeinrichtung zum Aufnehmen eines Bildes von der Umgebung eines Fahrzeugs, eine Detektionseinrichtung zum Detektieren eines vorausfahrenden Fahrzeugs, um ein vorausfahrendes Fahrzeug auf dem aufgenommenen Bild zu detektieren, eine Überwachungsbereich-Vorgabeeinrichtung zum Vorgeben von vorbestimmten überwachten Bereichen und das vorausfahrende Fahrzeug auf dem Bild herum, eine Vorhersageeinrichtung zum Vorhersagen einer Helligkeit einer Umgebung, in die sich das vorausfahrende Fahrzeug demnächst hineinbewegt, auf der Basis der Helligkeiten von Pixeln in den überwachten Bereichen, sowie eine Einstelleinrichtung zum Einstellen von einem Belichtungsbetrag der Bildaufnahmeeinrichtung und/oder den von der Bildaufnahmeeinrichtung abgegebenen Helligkeiten der Pixel vorab in Abhängigkeit von der von der Vorhersageeinrichtung vorhergesagten Helligkeit der Umgebung.

Es ist Aufgabe der vorliegenden Erfindung, ein Verfahren zum Betreiben einer Bildaufnahmeeinrichtung in einem Kraftfahrzeug sowie eine derartige Bildaufnahmeeinrichtung und ein Kraftfahrzeug mit einer derartigen Bildaufnahmeeinrichtung bereitzustellen, welche die Verwertbarkeit von aufgenommenen Bilddaten bei stark schwankenden Umgebungsbedingungen verbessert.

Diese Aufgabe wird durch ein Verfahren mit den Merkmalen des Patentanspruchs 1, eine Bildaufnahmeeinrichtung mit den Merkmalen des Patentanspruchs 9 sowie ein Kraftfahrzeug mit den Merkmalen des Patentanspruchs 10 gelöst. Vorteilhafte Weiterbildungen der vorliegenden Erfindung sind Gegenstand der abhängigen Ansprüche.

Die Erfindung geht aus von einem Verfahren zum Betreiben einer Bildaufnahmeeinrichtung in einem Kraftfahrzeug gemäß dem Oberbegriff des Patentanspruchs 1. Erfindungsgemäß wird das Verfahren weitergebildet durch Ermitteln eines Bilddatenteilbereichs der ersten und/oder zweiten Bilddaten, welche einen Vorhersageteilbereich des jeweils erfassbaren Umgebungsbilds repräsentiert, wobei der Bilddatenteilbereich in Abhängigkeit von einer vorhersagbaren Bahnkurve des Kraftfahrzeugs und einer vorgebbaren Vorhersagezeit ermittelt wird, und Einstellen der zweiten Belichtungszeit in Abhängigkeit von dem Bilddatenteilbereich. Bei der Bildaufnahmeeinrichtung kann es sich insbesondere um eine Kamera zur Aufnahme von Umgebungsbildern mittels elektromagnetischer Strahlung im Bereich optischer Wellenlängen, besonders bevorzugt im sichtbaren Bereich und/oder im infraroten Bereich. Abhängig von der Zeit, die zwischen dem Aufnehmen von den ersten Bilddaten und dem Aufnehmen von den zweiten Bilddaten vergeht, können das erste Umgebungsbild und das zweite Umgebungsbild fast identisch sein. Eine Änderung des abgebildeten Bereichs der Umgebung fällt umso stärker aus, je schneller sich das Kraftfahrzeug bewegt. Wenn die vorgebbare Vorhersagezeit jedoch groß ist gegenüber dem zeitlichen Abstand zwischen den beiden Aufnahmen, ist der Einfluss vor allem in dem hauptsächlich interessierenden Bilddatenteilbereich vernachlässigbar. Wenn das Kraftfahrzeug mit der Bildaufnahmeeinrichtung einen plötzlichen Übergang zu einer helleren beziehungsweise dunkleren Umgebung macht, ist seine Belichtungszeit, nämlich die zweite Belichtungszeit, unverzüglich an die neuen Bedingungen angepasst. Daher wird die Bildaufnahmeeinrichtung nicht mehr weiterhin eine Blindphase durchlaufen, welche zu einer Nichtverfügbarkeit von Sensordaten an ein Fahrerassistenzsystem führt. Anpassungen an die nahenden plötzlichen Änderungen in Helligkeitsbedingungen können vorgenommen werden, wenn das nahende Umfeld auf dem Kamerabild als über- oder unterbelichteter Punkt erscheint. Die Belichtungszeit kann dann angepasst werden in der Art, dass dieser Punkt nicht weiterhin über- oder unterbelichtet ist. Eine Anpassung an jeden über- oder unterbelichteten Punkt des Kamerabilds (Bilddaten) wird nicht als ausreichend erachtet, weil es mehrere über- oder unterbelichtete Punkte in den Bilddaten geben kann, welche nicht einmal zu dem Umgebungsbereich gehören, auf welchen die Kamera in Fahrtrichtung blickt. Daher ist die Bildaufnahmeeinrichtung (Kamera) dazu ausgelegt zu erfassen, auf welchen Teil des Bilds die Kamera beziehungsweise das Kraftfahrzeug, in dem die Kamera montiert ist, zuführt.

Bevorzugt erfolgt das Einstellen der ersten Belichtungszeit in Abhängigkeit des gesamten aufgenommenen Erfassungsbereichs der Bildaufnahmeeinrichtung. Dazu können in vorteilhafter Weise alle durch die Bildaufnahmeeinrichtung zur Verfügung gestellten Bildpunkte (Pixel) mit statistischen Methoden ausgewertet werden und unter Zugrundelegung eines geeigneten Gütekriteriums optimiert werden, so dass insgesamt das Bild möglichst keine oder wenige unter- und/oder überbelichtete Stellen (Bildpunkte/Pixel) aufweist. Dadurch stehen jederzeit erste Bilddaten zur Verfügung, welche ein Umgebungsbild mit einer den entsprechend aktuell vorliegenden Umgebungsbedingungen angepassten Belichtung aufgenommen wurde und folglich zur Auswertung durch ein Fahrerassistenzsystem verwertbar ist, solange keine plötzliche Änderung der Umgebungshelligkeit erfolgt.

Bevorzugt wird das Verfahren dadurch weitergebildet, dass zum Einstellen der jeweiligen Belichtungszeit in Abhängigkeit des jeweiligen Bilddatenbereichs eine Summe der Helligkeitswerte aller Bildpunkte des jeweiligen Bilddatenbereichs ermittelt wird und daraus mittels Division durch die Anzahl der jeweiligen Bildpunkte eine mittlere Helligkeit ermittelt wird. Dann wird die jeweilige Belichtungszeit um eine vorgebbare Zeit verlängert, wenn die mittlere Helligkeit einen unteren Helligkeitsschwellwert unterschreitet, und die jeweilige Belichtungszeit wird um eine vorgebbare Zeit verkürzt, wenn die mittlere Helligkeit einen oberen Helligkeitsschwellwert überschreitet. Es versteht sich von selbst, dass zweckmäßigerweise der obere Helligkeitsschwellwert größer zu wählen ist als der untere Helligkeitsschwellwert.

Besonders bevorzugt kann vorgesehen sein, dass der durch den Vorhersageteilbereich abgebildete Teilbereich eines zu einem ersten Zeitpunkt erfassten Umgebungsbilds weitgehend mit dem vollständig Bereich des Umgebungsbilds zusammenfällt, welcher zu einem zweiten Zeitpunkt durch die Bildaufnahmeeinrichtung erfassbar ist, wobei die Zeitdifferenz zwischen dem zweiten Zeitpunkt und dem ersten Zeitpunkt durch die Vorhersagezeit gegeben ist. Weitgehend ist hierbei unter dem Aspekt auszulegen, dass die Bahnkurve des Kraftfahrzeugs nicht hundertprozentig genau vorhergesehen werden kann, die Geschwindigkeit des Kraftfahrzeugs während des Verstreichens der Vorhersagezeit variieren kann, der Fahrbahnwinkel in Längsrichtung variiert, das heißt das Fahrzeug eine Nickbewegung ausführt, welche insbesondere auch durch ein Bremsen oder ein Beschleunigen verursacht werden kann sowie ein prinzipielles Abweichen eines Bilddatenbereichs durch eine perspektivische Verzerrung aufgrund der Aufnahme zu dem späteren Zeitpunkt nach der Vorhersagezeit aus einem möglicherweise gänzlich anderen Blickwinkel. Aus diesen und möglicherweise weiteren für den Fachmann erkennbaren Gründen ist somit die optimale Übereinstimmung des Vorhersageteilbereichs zu dem ersten Zeitpunkt mit dem vollständigen Bereichs des Umgebungsbilds zu dem zweiten Zeitpunkt in der Regel nur dann zu erwarten, wenn sich das Kraftfahrzeug mit konstanter Geschwindigkeit auf einer ebenen schnurgeraden Straße in Fahrtrichtung weiterbewegt. In den meisten anderen Fällen ist davon auszugehen, dass der Vorhersageteilbereich geringfügig größer oder kleiner als der tatsächlich zu dem späteren Zeitpunkt abgebildete Bereich des Umgebungsbilds ist und/oder dass es zu perspektivischen Verzerrungen zwischen den beiden Bildern kommt. Derartige Abweichungen sind jedoch für die Anwendbarkeit der Erfindung unerheblich, da sie allenfalls zu einer geringfügigen Abweichung der zweiten Belichtungszeit von ihrem optimalen Wert führen. Weiterhin kann vorgesehen sein, die Vorhersagezeit dynamisch anzupassen, vorzugsweise in Abhängigkeit von einer aktuellen Fahrgeschwindigkeit des Kraftfahrzeugs und/oder von einer Spurerkennungseinrichtung und/oder in Abhängigkeit von Fahrwerkssensoren, welche Daten über Gier-, Nick-, und/oder Rollbewegungen des Kraftfahrzeugs bereitstellen.

In besonders bevorzugter Weise wird das Verfahren weitergebildet durch Erkennen von Spurmarkierungen auf einer Fahrbahn, auf der sich das Kraftfahrzeug bewegt, mittels der Bildaufnahmeeinrichtung zum Ermitteln des Bilddatenteilbereichs. Hierfür können die Fahrbahnmarkierungen in den Bilddaten ermittelt werden. Wenn diese Fahrbahnmarkierungen zu einem über- oder unterbelichteten Bereich führen, wird dieser Bereich als der Bereich festgelegt, an den die Belichtungszeit der Kamera angepasst werden soll. Im Falle des Ausfahrens aus einem Tunnel kann das sogenannte "Structure from Motion"-Verfahren (SfM) auf die Bilddaten angewendet werden, die von der Kamera hergestellt sind, um das Ende des Tunnels zu erkennen.

In einer weiteren vorteilhaften Ausführungsform wird das Verfahren weitergebildet durch Erfassen von ortsfesten Objekten, welche neben und/oder über einer Fahrbahn angeordnet sind, an denen sich das Kraftfahrzeug vorbeibewegt, mittels einer von der Bildaufnahmeeinrichtung verschiedenen Sensoreinrichtung zum Ermitteln des Bilddatenteilbereichs. Bei der Sensoreinrichtung kann es sich um einen Laser-Scanner oder um eine Stereo-Kamera handeln. Ebenso kann es sich bei der Sensoreinrichtung um eine Radareinrichtung, eine Lidareinrichtung oder um eine Ultraschallmesseinrichtung handeln. Mit einem derartigen 3D-Sensor (Laser-Scanner/Stereo-Kamera) kann man die 3D-Struktur der Umgebung auf mögliche Trajektorien basierend auf der Befahrbarkeit der Umgebung analysieren. Anhand von diesen möglichen Trajektorien werden die interessanten Bildbereiche ausgewählt. So kann beispielsweise in einem Tunnel durch die Erkennung der Tunnelwände festgestellt werden, wo sich das Ende des Tunnels innerhalb der Bilddaten befindet.

In einer besonders bevorzugten Ausführungsform des Verfahrens kann vorgesehen sein, dass eine erste Bilderfolge mit jeweils ersten Bilddaten und eine zweite Bilderfolge mit jeweils zweiten Bilddaten aufgenommen wird, wobei abwechselnd jeweils eine Aufnahme von ersten Bilddaten und jeweils eine Aufnahme von zweiten Bilddaten erfolgt. Damit wird jede zweite Aufnahme (Frame) nicht benutzt, um die Gesamthelligkeitsbedingungen in der aktuellen Aufnahme anzupassen, sondern stattdessen auf die nahende plötzliche Änderung in den Helligkeitsbedingungen zu reagieren. Wenn dann die Bilderfassungseinrichtung den Übergang zu der dunkleren beziehungsweise helleren Umgebung vollzogen hat, ist die Bildaufnahmeeinrichtung bereits auf die plötzliche Helligkeitsänderung adaptiert und es gibt keine Blindphase.

Besonders bevorzugt wird das Verfahren weitergebildet durch Bereitstellen der ersten und zweiten Bilddaten an eine Fahrassistenzeinrichtung des Kraftfahrzeugs, Auswerten der ersten Bilddaten durch die Fahrassistenzeinrichtung, und falls die ersten Bilddaten für die bestimmungsgemäße Funktion der Fahrassistenzeinrichtung nicht verwendbar sind, Auswerten der zweiten Bilddaten durch Fahrassistenzeinrichtung. Hierdurch kann in vorteilhafter Weise erreicht werden, dass für unterschiedliche Fahrassistenzeinrichtungen auch bei stark schwankenden Umgebungshelligkeiten immer verwertbare Bilddaten zur Verfügung gestellt werden können, so dass die Verfügbarkeit der einzelnen Fahrerassistenzsysteme jederzeit sichergestellt ist.

Die Erfindung geht weiterhin aus von einer Bildaufnahmeeinrichtung gemäß dem Oberbegriff des Patentanspruchs 9. Erfindungsgemäß wird die Bildaufnahmeeinrichtung weitergebildet durch eine Auswerteeinheit, welche dazu ausgelegt ist, einen Bilddatenteilbereich der ersten und/oder zweiten Bilddaten, welche einen Vorhersageteilbereich des jeweils erfassbaren Umgebungsbilds repräsentiert, zu ermitteln, wobei der Bilddatenteilbereich in Abhängigkeit von einer vorhersagbaren Bahnkurve des Kraftfahrzeugs und einer vorgebbaren Vorhersagezeit ermittelt wird, und wobei die Steuereinheit dazu ausgelegt ist, die zweite Belichtungszeit in Abhängigkeit von dem Bilddatenteilbereich einzustellen.

Bevorzugt kann ein Kraftfahrzeug eine erfindungsgemäße Bildaufnahmeeinrichtung aufweisen, wodurch sich ein erfindungsgemäßes Kraftfahrzeug ergibt.

Die für das erfindungsgemäße Verfahren beschriebenen Vorteile und Merkmale sowie Ausführungsformen gelten gleichermaßen für die erfindungsgemäße Bildaufnahmeeinrichtung und das erfindungsgemäße Kraftfahrzeug und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch bei Separieren der Merkmalskombinationen aus den erläuterten Ausführungen hervorgehen und erzeugbar sind.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in vereinfachter schematischer Darstellung ein erfindungsgemäßes Kraftfahrzeug innerhalb einer beispielhaften Umgebung;
- Fig. 2: in vereinfachter schematischer Darstellung jeweils eine graphische Darstellung von ersten Bilddaten mit einer ersten Belichtungszeit und zweiten Bilddaten mit einer zweiten Belichtungszeit; und
- Fig. 3: eine vereinfachte schematische Darstellung einer bevorzugten Ausführungsform einer erfindungsgemäßen Bildaufnahmeeinrichtung.

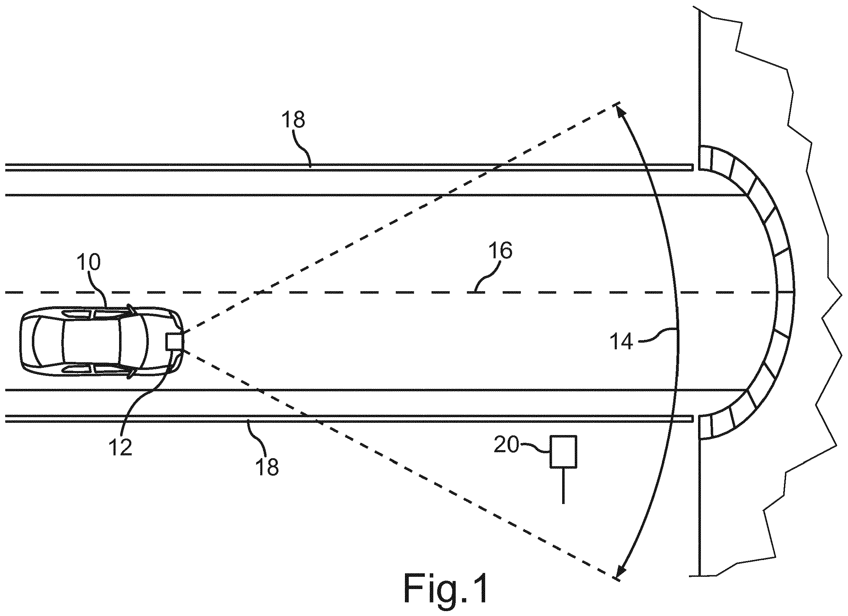

Gemäß einer bevorzugten Ausführungsform des erfindungsgemäßen Verfahrens kann ein Kraftfahrzeug 10, welches mit einer erfindungsgemäßen Bildaufnahmeeinrichtung 12 ausgestattet ist, gemäß der Darstellung in Fig. 1 auf eine Tunneleinfahrt zufahren. Die Fahrbahn ist hier beispielhaft in beide Fahrtrichtungen jeweils einspurig dargestellt, wobei die beiden Fahrstreifen durch eine Spurmarkierung 16 in Form einer Mittellinie (unterbrochene Linie) getrennt. Auf beiden Seiten der Fahrbahn sind Leitplanken 18 angeordnet. Ein Erfassungsbereich 14 der Bildaufnahmeeinrichtung 12 umfasst in der Darstellung gemäß der Fig. 1 die Tunneleinfahrt in vollem Umfang, das heißt das vollständige Tunnelportal. In Fahrtrichtung rechts angeordnet ist außerdem ein Verkehrsschild 20. Wenn sich das Kraftfahrzeug 10 nun weiterhin auf die Tunneleinfahrt zubewegt, wird diese innerhalb des Erfassungsbereichs 14 stetig größer, bis die Tunneleinfahrt schließlich den gesamten Erfassungsbereich 14 einnimmt und kurz vor beziehungsweise spätestens bei der Einfahrt lediglich noch die Innenwände des Tunnels erfassbar sind. Das Verkehrsschild 20 wird mit abnehmendem Abstand zwischen dem Kraftfahrzeug 10 und dem Verkehrsschild 20 stetig größer werden und dabei allmählich aus dem Erfassungsbereich 14 auswandern. Gemäß der Erfindung soll vermieden werden, dass das Kraftfahrzeug 10 mit der darin angebrachten Bildaufnahmeeinrichtung 12 kurz vor oder bei der Einfahrt in den Tunnel durch eine schlagartig sinkende Umgebungshelligkeit keine verwertbaren Bilddaten mehr an eine Fahrassistenzeinrichtung bereitstellen kann.

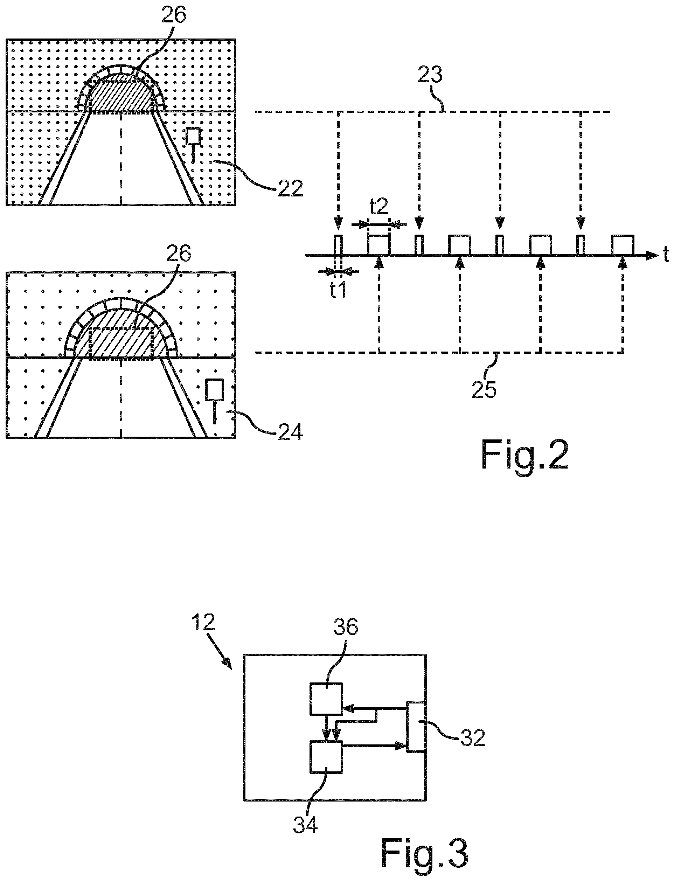

Wie aus der Fig. 2 ersichtlich, werden dazu erste Bilddaten 22 mit einer ersten Belichtungszeit t1 in Abhängigkeit von einem innerhalb eines Erfassungsbereichs 14 der Bildaufnahmeeinrichtung 12 erfassbaren ersten Umgebungsbild aufgenommen sowie zweite Bilddaten 24 mit einer zweiten Belichtungszeit t2 in Abhängigkeit von einem innerhalb des Erfassungsbereichs 14 der Bildaufnahmeeinrichtung 12 erfassbaren zweiten Umgebungsbild aufgenommen. Gemäß der Darstellung in der Fig. 2 ist die Helligkeit innerhalb des Tunnelportals, auf den sich das Kraftfahrzeug 10 zubewegt, deutlich geringer und somit dunkler als die Umgebung außerhalb des Tunnels, was durch eine dichte Schraffur symbolisiert ist. Die hellere Umgebung ist durch ein Punktraster symbolisiert. Weiterhin ist in den ersten Bilddaten 22 eine Darstellung des Verkehrsschilds 20 erkennbar, welches sich in etwa bei der Hälfte des Fahrbahnausschnitts zwischen der Unterkante der Bilddarstellung der Bilddaten 22 und dem Beginn des Tunnelportals befindet. In dem gewählten Ausführungsbeispiel erfolgt das Aufnehmen der zweiten Bilddaten 24 um eine vorgebbare Zeit verzögert nach der Aufnahme der ersten Bilddaten 22, was dadurch erkennbar ist, dass das Tunnelportal etwas größer geworden ist sowie die Darstellung des Verkehrsschilds 20 ebenfalls größer geworden ist und nach rechts unten innerhalb der graphischen Darstellung der zweiten Bilddaten 24 gewandert ist. Aufgrund der längeren zweiten Belichtungszeit t2, mit der die zweiten Bilddaten 24 im Vergleich zu den ersten Bilddaten 22 aufgenommen wurden, ist der Bereich des Tunnelportals heller, was durch eine im Vergleich zu der graphischen Darstellung der ersten Bilddaten 22 weiter beabstandeten Schraffur dargestellt ist. Ebenso ist der Hintergrund, welcher außerhalb des Tunnelportals liegt, durch ein Punktemuster mit größerem Abstand symbolisiert. Innerhalb der ersten Bilddaten 22 und der zweiten Bilddaten 24 ist jeweils ein Bilddatenteilbereich 26 eingezeichnet, welcher unter idealisierten Umgebungsbedingungen den Bildausschnitt der ersten Bilddaten 22 beziehungsweise der zweiten Bilddaten 24 angibt, welcher um eine vorgebbare Vorhersagezeit später den gesamten Bildbereich der ersten Bilddaten 22 beziehungsweise der zweiten Bilddaten 24 ausfüllen wird. In Abhängigkeit von dem Bilddatenteilbereich 26 erfolgt ein Einstellen der zweiten Belichtungszeit t2.

In einer besonders vorteilhaften Ausführungsform kann vorgesehen sein, dass eine erste Bilderfolge 23 mit jeweils ersten Bilddaten 22 und eine zweite Bilderfolge 25 mit jeweils zweiten Bilddaten 24 aufgenommen wird, wobei abwechselnd jeweils eine Aufnahme von ersten Bilddaten 22und jeweils eine Aufnahme von zweiten Bilddaten 24 erfolgt. In dem dargestellten Ausführungsbeispiel sind die beiden Bilderfolgen 23, 25 äquidistant ineinander verschachtelt, es können jedoch auch beliebige Abwandlungen in dem Aufbau der ersten Bilderfolge 23 und/oder der zweiten Bilderfolge 25 sowie deren Anordnung zueinander implementiert werden.

In bevorzugter Weise kann die Einstellung der zweiten Belichtungszeit t2 dadurch erfolgen, dass zum Einstellen der jeweiligen Belichtungszeit t1 beziehungsweise t2 in Abhängigkeit des jeweiligen Bilddatenbereichs eine Summe der Helligkeitswerte aller Bildpunkte des jeweiligen Bilddatenbereichs ermittelt wird und daraus mittels Division durch die Anzahl der jeweiligen Bildpunkte eine mittlere Helligkeit ermittelt wird, und die jeweilige Belichtungszeit t1, t2 um eine vorgebbare Zeit verlängert wird, wenn die mittlere Helligkeit einen unteren Helligkeitsschwellwert unterschreitet, und die jeweilige Belichtungszeit t1, t2 um eine vorgebbare Zeit verkürzt wird, wenn die mittlere Helligkeit einen oberen Helligkeitsschwellwert überschreitet. Ebenso kann vorgesehen sein, dass in Abhängigkeit von einer vorgebbaren mittleren Helligkeit als Soll-Wert eine Regelung, insbesondere mittels eines P-Reglers, eines PI-Reglers oder eines I-Reglers, realisiert ist.

Ein bevorzugtes Ausführungsbeispiel einer erfindungsgemäßen Bildaufnahmeeinrichtung 12 ist in der Fig. 3 dargestellt. Die Bildaufnahmeeinrichtung 12 umfasst einen opto-elektronisches Bildwandler 32, welcher beispielsweise als CCD-Sensor (charge-coupled device) oder als CMOS-Sensor vorliegen kann, eine Steuereinheit 34 zur Einstellung der jeweiligen Belichtungszeit t1, t2 des opto-elektronischen Bildwandlers 32, sowie eine Auswerteeinheit 36. Die Auswerteeinheit 36 ist dazu ausgelegt, den Bilddatenteilbereich 26 der ersten und/oder der zweiten Bilddaten 22, 24, welcher einen Vorhersageteilbereich des jeweils erfassbaren Umgebungsbilds repräsentiert, zu ermitteln, wobei der Bilddatenteilbereich 26 in Abhängigkeit von einer vorhersagbaren Bahnkurve des Kraftfahrzeugs 10 und einer vorgebbaren Vorhersagezeit ermittelt wird. Die von dem opto-elektronischen Bildwandler 32 bereitgestellten ersten Bilddaten 22 beziehungsweise zweiten Bilddaten 24 werden sowohl an die Steuereinheit 34 als auch an die Auswerteeinheit 36 bereitgestellt. Die Auswerteeinheit 36 ihrerseits liefert die Daten über den Bilddatenteilbereich 26 an die Steuereinheit 34.

Die Ausführungsbeispiele dienen lediglich der Erläuterung der Erfindung und sind für diese nicht beschränkend. So können insbesondere abweichende Algorithmen zur Einstellung der jeweiligen Belichtungszeiten t1, t2 sowie Ausführungen der Bilderfolgen 23, 25 beliebig gestaltet sein, ohne den Gedanken der Erfindung zu verlassen.

Somit wurde voranstehend gezeigt, wie prädiktive Belichtungsanpassung einer Kamera in einem Kraftfahrzeug erfolgen kann.

## Patentansprüche

1. Verfahren zum Betreiben einer Bildaufnahmeeinrichtung (12) in einem Kraftfahrzeug (10) durch:
- Aufnehmen von ersten Bilddaten (22) mit einer ersten Belichtungszeit (t1) in Abhängigkeit von einem innerhalb eines Erfassungsbereichs (14) der Bildaufnahmeeinrichtung (12) erfassten ersten Umgebungsbild, und
- Aufnehmen von zweiten Bilddaten (24) mit einer zweiten Belichtungszeit (t2) in Abhängigkeit von einem innerhalb des Erfassungsbereichs (14) der Bildaufnahmeeinrichtung (12) erfassten zweiten Umgebungsbild, und
- Ermitteln eines Bilddatenteilbereichs (26) der ersten und/oder zweiten Bilddaten (22, 24), welcher einen Vorhersageteilbereich des jeweils erfassten Umgebungsbilds repräsentiert, wobei der Bilddatenteilbereich (26) in Abhängigkeit von einer vorhergesagten Bahnkurve des Kraftfahrzeugs (10) und einer vorgegebenen Vorhersagezeit ermittelt wird, **gekennzeichnet durch**
- Einstellen der ersten Belichtungszeit (t1) in Abhängigkeit von den ersten Bilddaten (22),und
- Einstellen der zweiten Belichtungszeit (t2) in Abhängigkeit von dem Bilddatenteilbereich (26), wobei das Einstellen der ersten Belichtungszeit (t1) in Abhängigkeit des gesamten aufgenommenen Erfassungsbereichs (14) der Bildaufnahmeeinrichtung (12) erfolgt und wobei der durch den Vorhersageteilbereich abgebildete Teilbereich eines zu einem ersten Zeitpunkt erfassten Umgebungsbilds weitgehend mit dem vollständigen Bereich des Umgebungsbilds zusammenfällt, welcher zu einem zweiten Zeitpunkt durch die Bildaufnahmeeinrichtung (12) erfasst wird, wobei die Zeitdifferenz zwischen dem zweiten Zeitpunkt und dem ersten Zeitpunkt durch die Vorhersagezeit gegeben ist.

2. Verfahren nach Anspruch 1,
**dadurch gekennzeichnet,**
**dass** zum Einstellen der jeweiligen Belichtungszeit (t1, t2) in Abhängigkeit des jeweiligen Bilddatenbereichs eine Summe der Helligkeitswerte aller Bildpunkte des jeweiligen Bilddatenbereichs ermittelt wird und daraus mittels Division durch die Anzahl der jeweiligen Bildpunkte eine mittlere Helligkeit ermittelt wird, und
- die jeweilige Belichtungszeit (t1, t2) um eine vorgebbare Zeit verlängert wird, wenn die mittlere Helligkeit einen unteren Helligkeitsschwellwert unterschreitet, und
- die jeweilige Belichtungszeit (t1, t2) um eine vorgebbare Zeit verkürzt wird, wenn die mittlere Helligkeit einen oberen Helligkeitsschwellwert überschreitet.

3. Verfahren nach einem der vorhergehenden Ansprüche,
**gekennzeichnet durch**,
- Erkennen von Spurmarkierungen (16) auf einer Fahrbahn, auf der sich das Kraftfahrzeug (10) bewegt, mittels der Bildaufnahmeeinrichtung (12) zum Ermitteln des Bilddatenteilbereichs (26).

4. Verfahren nach einem der vorhergehenden Ansprüche,
**gekennzeichnet durch**
- Erfassen von ortsfesten Objekten (20), welche neben und/oder über einer Fahrbahn angeordnet sind, an denen sich das Kraftfahrzeug (10) vorbeibewegt, mittels einer von der Bildaufnahmeeinrichtung (12) verschiedenen Sensoreinrichtung zum Ermitteln des Bilddatenteilbereichs (26).

5. Verfahren nach einem der vorhergehenden Ansprüche,
**dadurch gekennzeichnet,**
**dass** eine erste Bilderfolge (23) mit jeweils ersten Bilddaten (22) und eine zweite Bilderfolge (25) mit jeweils zweiten Bilddaten (24) aufgenommen wird, wobei abwechselnd jeweils eine Aufnahme von ersten Bilddaten (22) und jeweils eine Aufnahme von zweiten Bilddaten (24) erfolgt.

6. Verfahren nach einem der vorhergehenden Ansprüche,
**gekennzeichnet durch**
- Bereitstellen der ersten und zweiten Bilddaten (22, 24) an eine Fahrassistenzeinrichtung des Kraftfahrzeugs (10),
- Auswerten der ersten Bilddaten (22) durch die Fahrassistenzeinrichtung, und falls die ersten Bilddaten (22) für die bestimmungsgemäße Funktion der Fahrassistenzeinrichtung nicht verwendbar sind:
- Auswerten der zweiten Bilddaten (24) durch die Fahrassistenzeinrichtung.

7. Bildaufnahmeeinrichtung (12) für ein Kraftfahrzeug (10) mit
- einem opto-elektronischen Bildwandler (32), welcher dazu ausgelegt ist, erste Bilddaten (22) mit einer ersten Belichtungszeit (t1) in Abhängigkeit von einem innerhalb eines Erfassungsbereichs (14) der Bildaufnahmeeinrichtung (12) erfassbaren ersten Umgebungsbild aufzunehmen und zweite Bilddaten (24) mit einer zweiten Belichtungszeit (t2) in Abhängigkeit von einem innerhalb des Erfassungsbereichs (14) der Bildaufnahmeeinrichtung (12) erfassbaren zweiten Umgebungsbild aufzunehmen, und
- einer Auswerteeinheit (36), welche dazu ausgelegt ist, einen Bilddatenteilbereich (26) der ersten und/oder zweiten Bilddaten (22, 24), welcher einen Vorhersageteilbereich des jeweils erfassbaren Umgebungsbilds repräsentiert, zu ermitteln, wobei der Bilddatenteilbereich (26) in Abhängigkeit von einer vorhersagbaren Bahnkurve des Kraftfahrzeugs (10) und einer vorgebbaren Vorhersagezeit ermittelt wird,
**gekennzeichnet durch**
- eine Steuereinheit (34), welche dazu ausgelegt ist, die erste Belichtungszeit (t1) in Abhängigkeit von den ersten Bilddaten (22) einzustellen und die zweite Belichtungszeit (t2) in Abhängigkeit von dem Bilddatenteilbereich (26) einzustellen, wobei das Einstellen der ersten Belichtungszeit (t1) in Abhängigkeit des gesamten aufgenommenen Erfassungsbereichs (14) der Bildaufnahmeeinrichtung (12) erfolgt und wobei der durch den Vorhersageteilbereich abgebildete Teilbereich eines zu einem ersten Zeitpunkt erfassten Umgebungsbilds weitgehend mit dem vollständigen Bereich des Umgebungsbilds zusammenfällt, welcher zu einem zweiten Zeitpunkt durch die Bildaufnahmeeinrichtung (12) erfassbar ist, wobei die Zeitdifferenz zwischen dem zweiten Zeitpunkt und dem ersten Zeitpunkt durch die Vorhersagezeit gegeben ist.

8. Kraftfahrzeug (10) mit einer Bildaufnahmeeinrichtung (12) nach Anspruch 7.

## Claims

1. Method for operating an image-recording device (12) in a motor vehicle (10) by:
- recording first image data (22) with a first exposure time (t1) in dependence on a first environmental image detected within a detection range (14) of the image recording device (12), and
- recording second image data (24) with a second exposure time (t2) in dependence on a second environmental image detected within the detection range (14) of the image recording device (12), and
- determining an image data subarea (26) of the first and/or second image data (22, 24) representing a prediction subarea of the respectively acquired environmental image, wherein the image data subarea (26) is determined depending on a predicted trajectory of the motor vehicle (10) and a predefined prediction time,
**characterised by**
- setting the first exposure time (t1) in dependence on the first image data (22), and
- setting the second exposure time (t2) in dependence on the image data subarea (26), wherein setting of the first exposure time (t1) takes place in dependence of the total recorded detection area (14) of the image recording device (12) and wherein the subarea of an environmental image detected at a first time by the subarea represented by the prediction subarea, largely coincides with the complete area of the environmental image detected at a second time by the image recording device (12), wherein the time difference between the second time and the first time is given by the prediction time.

2. Method according to claim 1,
**characterised in that**,
for setting the respective exposure time (t1, t2), a sum of the brightness values of all pixels of the respective image data area is determined in dependence on the respective image data area and a mean brightness is determined there from by division by the number of the respective pixels, and
- the respective exposure time (t1, t2) is extended by a definable time, when the mean brightness falls below a lower brightness threshold, and
- the respective exposure time (t1, t2) is shortened by a definable time when the mean brightness exceeds an upper brightness threshold.

3. Method according to one of the preceding claims, **characterised by**
- detecting lane markings (16) on a roadway on which the motor vehicle (10) is moving, by means of the image recording device (12) for determining the image data subarea (26).

4. Method according to one of the preceding claims, **characterised by**
- detecting stationary objects (20) that are disposed adjacently to and/or above a roadway, where the motor vehicle (10) is moving past, by means of a sensor device different from the image recording device (12) for determining the image data subarea (26).

5. Method according to one of the preceding claims,
**characterised in that**
a first image sequence (23) with respectively first image data (22) and a second image sequence (25) with respectively second image data (24) are recorded, wherein alternately in each case one image of first image data (22) and one image of second image data (24) is recorded.

6. Method according to one of the preceding claims, **characterised by**
- providing the first and second image data (22, 24) to a driving assistance device of the motor vehicle (10),
- evaluating the first image data (22) by the driving assistance device, and if the first image data (22) are not usable for the intended function of the driving assistance device:
- evaluating the second image data (24) by the driving assistance device.

7. Image recording device (12) for a motor vehicle (10) with
- an optoelectronic image converter (32) that is designed to record first image data (22) with a first exposure time (t1) in dependence on a first environmental image detectable within a detection area (14) of the image recording device (12) and second image data (24) with a second exposure time (t2) in dependence on a second environmental image detectable within a detection area (14) of the image recording device (12), and
- an evaluation unit (36) that is designed to determine an image data subarea (26) of the first and/or second image data (22, 24), which represents a prediction subarea of each detectable environmental image, wherein the image data subarea (26) is determined in dependence on a predictable trajectory of the motor vehicle (10) and a definable prediction time,
**characterised by**
- a control unit (34) that is designed to set the first exposure time (t1) in dependence on the first image data (22) and the second exposure time (t2) in dependence on the image data subarea (26), wherein setting of the first exposure time (t1) in dependence on the entire recorded detection area (14) of the image recording device (12) takes place and wherein the subarea of an environmental image acquired by the prediction subarea represented by the prediction subarea largely coincides with the complete area of the environmental image, which is detectable at a second time by the image recording device (12), wherein the time difference between the second time and the first time is given by the prediction time.

8. Motor vehicle (10) with an image recording device (12) according to claim 7.

## Revendications

1. Procédé servant à faire fonctionner un dispositif de prise d'image (12) dans un véhicule automobile (10) par :
- la prise de premières données d'image (22) avec une première durée d'exposition à la lumière (t1) en fonction d'une première image d'environnement capturée à l'intérieur d'une zone de capture (14) du dispositif de prise d'image (12), et
- la prise de deuxièmes données d'image (24) avec une deuxième durée d'exposition à la lumière (t2) en fonction d'une deuxième image d'environnement capturée à l'intérieur de la zone de capture (14) du dispositif de prise d'image (12), et
- la détermination d'une zone partielle de données d'image (26) des premières et/ou deuxièmes données d'image (22, 24), qui représente une zone partielle de prévision de l'image d'environnement respectivement capturée, dans lequel la zone partielle de donnée d'image (26) est déterminée en fonction d'une trajectoire prévue du véhicule automobile (10) et d'une durée de prévision prédéfinie,
**caractérisé par**
- le réglage de la première durée d'exposition à la lumière (t1) en fonction des premières données d'image (22), et
- le réglage de la deuxième durée d'exposition à la lumière (t2) en fonction de la zone partielle de données d'image (26), dans lequel le réglage de la première durée d'exposition à la lumière (t1) est effectué en fonction de l'ensemble de la zone de capture (14) prise du dispositif de prise d'image (12) et dans lequel la zone partielle reproduite par la zone partielle de prévision d'une image d'environnement capturée à un premier moment coïncide largement avec la totalité de la zone de l'image d'environnement, qui est capturée à un deuxième moment par le dispositif de prise d'image (12), dans lequel la différence de temps entre le deuxième moment et le premier moment est donnée par la durée de prévision.

2. Procédé selon la revendication 1,
**caractérisé en ce**
**que** pour régler le temps d'exposition à la lumière (t1, t2) respectif en fonction de la zone de données d'image respective, une somme des valeurs de clarté de tous les points d'image de la zone de données d'image respective est déterminée et une clarté moyenne est déterminée sur cette base au moyen de la division par le nombre des points d'image respectifs, et
- le temps d'exposition à la lumière (t1, t2) respectif est prolongé d'une durée pouvant être prédéfinie quand la clarté moyenne présente une valeur inférieure à la valeur de seuil de clarté inférieure, et
- le temps d'exposition à la lumière (t1, t2) respectif est raccourci d'une durée pouvant être prédéfinie quand la clarté moyenne dépasse une valeur de seuil de clarté supérieure.

3. Procédé selon l'une quelconque des revendications précédentes,
**caractérisé par**
- la reconnaissance de marquages de voie (16) sur une chaussée de circulation, sur laquelle se déplace le véhicule automobile (10), au moyen du dispositif de prise d'image (12) afin de déterminer la zone partielle de données d'image (26).

4. Procédé selon l'une quelconque des revendications précédentes,
**caractérisé par**
- la capture d'objets (20) stationnaires, qui sont disposés à côté et/ou au-dessus d'une voie de circulation, le long desquels le véhicule automobile (10) se déplace, au moyen d'un dispositif de capteur différent du dispositif de prise d'image (12) pour déterminer la zone partielle de données d'image (26).

5. Procédé selon l'une quelconque des revendications précédentes,
**caractérisé en ce**
**qu'**une première série d'images (23) est prise avec respectivement des premières données d'image (22) et une deuxième série d'images (25) est prise avec respectivement des deuxièmes données d'image (24), dans lequel respectivement une prise de premières données d'image (22) et respectivement une prise de deuxièmes données d'image (24) sont effectuées en alternance.

6. Procédé selon l'une quelconque des revendications précédentes,
**caractérisé par**
- la fourniture des premières et deuxièmes données d'image (22, 24) à un dispositif d'assistance à la conduite du véhicule automobile (10),
- l'évaluation des premières données d'image (22) par le dispositif d'assistance à la conduite, et si les premières données d'image (22) ne peuvent être utilisées pour la fonction conforme à l'usage prévu du dispositif d'assistance à la conduite :
- l'évaluation des deuxièmes données d'image (24) par le dispositif d'assistance à la conduite.

7. Dispositif de prise d'image (12) pour un véhicule automobile (10) avec
- un convertisseur d'image (32) optoélectronique, qui est configuré pour prendre des premières données d'image (22) avec une première durée d'exposition à la lumière (t1) en fonction d'une première image d'environnement pouvant être capturée à l'intérieur d'une zone de capture (14) du dispositif de prise d'image (12) et des deuxièmes données d'image (24) avec une deuxième durée d'exposition à la lumière (t2) en fonction d'une deuxième image d'environnement pouvant être capturée à l'intérieur de la zone de capture (14) du dispositif de prise d'image (12), et
- une unité d'évaluation (36), qui est configurée pour déterminer une zone partielle de donnée d'image (26) des premières et/ou deuxièmes données d'image (22, 24), qui représente une zone partielle de prévision de l'image d'environnement pouvant être capturée respectivement, dans lequel la zone partielle de données d'image (26) est déterminée en fonction d'une trajectoire pouvant être prévue du véhicule automobile (10) et d'une durée de prévision prédéfinie,
**caractérisé par**
- une unité de commande (34), qui est configurée pour régler la première durée d'exposition à la lumière (t1) en fonction des premières données d'image (22) et pour régler la deuxième durée d'exposition à la lumière (t2) en fonction de la zone partielle de données d'image (26), dans lequel le réglage de la première durée d'exposition à la lumière (t1) est effectué en fonction de l'ensemble de la zone de capture (14) prise du dispositif de prise d'image (12) et dans lequel la zone partielle reproduite par la zone partielle de prévision d'une image d'environnement capturée à un premier moment coïncide largement avec la zone complète de l'image d'environnement, laquelle peut être capturée à un deuxième moment par le dispositif de prise d'image (12), dans lequel la différence de temps entre le deuxième moment et le premier moment est donnée par la durée de prévision.

8. Véhicule automobile (10) avec un dispositif de prise d'image (12) selon la revendication 7.
